# EUROPÄISCHE PATENTSCHRIFT

(11) **EP 0 996 494 B1**
(45) Veröffentlichungstag und Bekanntmachung des Hinweises auf die Patenterteilung: **28.08.2002**
(21) Anmeldenummer: 98935017.8
(22) Anmeldetag: 03.07.1998
(51) Int. Cl.: B01D 53/86, B01J 29/24

(54) **VERFAHREN ZUR KATALYTISCHEN REDUKTION VON STICKOXIDEN**
METHOD FOR CATALYTIC REDUCTION OF NITRIC OXIDES
PROCEDE DE REDUCTION CATALYTIQUE D'OXYDES D'AZOTE

(30) Priorität: 04.07.1997 DE 19728699
(43) Veröffentlichungstag der Anmeldung: 03.05.2000
(73) Patentinhaber: MG Technologies AG, 60325 Frankfurt am Main (DE)
(72) Erfinder: SAMANT, Gurudas, D-35112 Fronhausen (DE); HERDEN, Hansjörg, D-63110 Rodgau (DE); MAYER-SCHWINNING, Gernot, D-61352 Bad Homburg (DE)
(74) Vertreter: Revesz, Veronika
(86) Internationale Anmeldenummer: EP9804122
(87) Internationale Veröffentlichungsnummer: WO99001204

(56) Entgegenhaltungen:
- EP-A- 0 682 974
- WO-A-94/03264
- DE-C- 4 313 479
- US-A- 4 473 535
- US-A- 4 910 004
- US-A- 5 059 569
- US-A- 5 171 553

## Beschreibung

Die Erfindung betrifft ein Verfahren zur katalytischen Reduktion von in sauerstoffhaltigen Abgasen von Verbrennungseinrichtungen enthaltenden Stickoxiden, bei dem den eine Temperatur von 150 bis 950 °C aufweisenden Abgasen Ammoniak im Molverhältnis NO:NH₃ von 1:0,5 bis 1:1,5 zugesetzt wird und bei dem in einem von den Abgasen mit einer Geschwindigkeit von 1 bis 50 m/s durchströmten Reaktionsraum als Katalysator natürlich vorkommender Zeolith mit 0,1 bis 10 Gew.-% katalytisch aktiver Substanzen, bestehend aus einem oder mehreren im Zeolithgitter durch Kationenaustausch eingebauten Metallionen, Kupfer und Eisen, suspendiert ist.

In Verbrennungseinrichtungen entstehen Stickoxide, die unter Einwirkung von Sonnenlicht zur Bildung von Smog führen, der gesundheitliche Schäden und Vegetationsschäden verursacht. Beim nichtkatalytisch arbeitenden SNCR (Selective Non-Catalytic Reduction)-Verfahren wird als Reduktionsmittel eine wässrige Ammoniak- oder Harnstofflösung bei Temperaturen von 850 bis 1000°C über ein Düsensystem in den Feuerungsraum einer Verbrennungsanlage eingebracht. Bei hohen Abscheidegraden von > 80 % ist dafür ein stöchiometrischer Überschuß von NH₃ zu Stickoxiden von wenigstens 2 bis 3 notwendig. Ein vergleichbarer stöchiometrischer Überschuß gilt für Ammoniak als Reduktionsmittel. Den Überschüssen an Reduktionsmittel entsprechend muß mit einer Ammoniakbelastung der Abgase und gegebenenfalls auch der Flugstäube gerechnet werden. Der Ammoniakschlupf stellt eine Belastung für die Umwelt dar. Die Ammoniakbelastung der Flugstäube und anderer Feststoffreaktionen muß durch eine Einrichtung zur Aschewaschung beseitigt werden.

Beim katalytisch betriebenen SCR(Selective Catalytic Reduction)-Verfahren wird den Abgasen mit Luft vorgemischtes Ammoniak bzw. Ammoniakwasser in etwa stöchiometrischer Menge zum abzuscheidenden Stickoxid zudosiert und die Ammoniak enthaltenden Abgase anschließend über einen in mehreren Ebenen angeordneten Katalysator geleitet. Der Katalysator besteht im allgemeinen aus Titandioxid als Hauptkomponente sowie Oxiden von Vanadium, Wolfram und gegebenenfalls anderen Metallen. Günstige Betriebstemperaturen liegen im Bereich zwischen 320 und 380°C.

In der EP-B-0 266 807 ist ein Verfahren zur katalytischen Reduktion von in Verbrennungsabgasen enthaltenen Stickoxiden mit Ammoniak beschrieben. Bei diesem Verfahren werden die Verbrennungsabgase mit Ammoniak im Molverhältnis 1:1 gemischt und die Mischung am Katalysator bei erhöhter Temperatur sowie bei Normaldruck zur Reaktion gebracht. Der Katalysator, dessen Teilchen einen Durchmesser von 0,1 bis 3 mm besitzen, setzt sich zusammen aus einem Träger aus Al₂O₃ oder einem Gemisch aus Al₂O₃ und SiO₂ und einer katalytisch aktiven Substanz aus V₂O₅, MnO₂, CuO, Fe₂O₃ und/oder NiO. Diese katalytische Substanz ist in einer Menge von 0,5 bis 20 Gew.-% auf den Träger aufgebracht. Die katalytische Reduktion der Stickoxide erfolgt in einer Wirbelschicht bei einer Temperatur von 185 bis 500°C. Dieser Katalysator ist nicht stabil, so daß der Stickoxid-Umsatz beeinträchtigt wird und ein großer Verbrauch an Katalysator vorliegt. Die auf den Träger aufgebrachte katalytisch aktive Substanz wird in der Wirbelschicht abgerieben, gelangt als feinstteiliger Staub ins Abgas, wird über den Kamin ausgetragen und kann Umweltschäden verursachen.

Ähnliche Nachteile sind auch mit dem Verfahren zur katalytischen Reduktion von in Gasen enthaltenen Stickoxiden unter Verwendung von Ammoniak als Reduktionsmittel gemäß DE-C-36 42 980 verbunden. Dabei werden die Gase mit Ammoniak im Molverhältnis NO:NH₃ von 1:0,7 bis 1:1,3 gemischt und diese Mischung bei einer Temperatur von 185 bis 500°C mit einem in einer zirkulierenden Wirbelschicht suspendierten Katalysator, dessen Teilchengröße 0,1 bis 3 mm beträgt, zur Reaktion gebracht. Der Katalysator besteht aus einem sauren Träger aus SiO₂,α-Al₂O₃ oder Alumosilikaten sowie einer oder mehrerer der katalytisch aktiven Substanzen CuSO₄, MnSO₄, FeSO₄ und/oder Fe₂(SO₄)₃ und ist in einer Menge von 0,5 bis 20 Gew.-% auf den Träger aufgebracht. Auch bei diesem Verfahren wird die auf dem Träger befindliche katalytisch aktive Substanz in der Wirbelschicht abgerieben und mit dem Abgas emittiert. Außerdem können SO₂ bzw. SO₃ freigesetzt werden.

Zwar ist aus der EP-B-0 376 025 auch ein Verfahren zur Reduktion von in sauerstoffhaltigen Abgasen vorhandenen Stickoxiden beschrieben, bei dem die Abgase mit Ammoniak gemischt und dieses Gemisch mit einer Raumgeschwindigkeit von 1000 bis 60000 pro Stunde entsprechend einer Katalysatorenflächenbelastung von 0,5 bis 100 m³ iN/hm² bei Temperaturen von 200 bis 600°C über einen säurebeständigen Zeolithen vom Mordenit-Typ, der mit Eisen, Kupfer oder Cer belastet ist, geleitet wird. Bei diesem Verfahren ist der Katalysator als Oberflächenbeschichtung auf einem chemisch inerten geformten keramischen oder metallischen Träger oder als Formkörper in Schüttgutform eingesetzt und nicht regenerierbar.

Die US-A-4 473 535 beschreibt ein Verfahren zur katalytischen Reduktion von in sauerstoffhaltigen Abgasen vorkommenden Stickoxiden unter Verwendung eines synthetischen Mordenits, in dessen Gitter als katalytisch aktive Substanz Kupfer durch Kationenaustausch eingebaut ist. In der US-A-4 910 004 ist ein Verfahren zur katalytischen Reduktion von in sauerstoffhaltigen Abgasen enthaltenden Stickoxiden offenbart. Dabei wird ein synthetischer, kleinporiger Mordenit mit 1 bis 5 Gew.-% im Zeolithgitter durch Kationenaustausch eingebautem Kupfer eingesetzt. Gemäß US-A-5 059 569 beträgt der im Zeolithgitter eingebaute Kupfergehalt 2 bis 7 Gew.-%. In allen drei Fällen handelt es sich um die Anwendung eines von den Abgasen durchströmten Katalysatorkörpers.

Es ist die Aufgabe der vorliegenden Erfindung, das eingangs beschriebene Verfahren so auszugestalten, daß ein hoher quantitativer Abbau der Stickoxide erreicht wird, der dabei eingesetzte Katalysator vollständig regenerierbar ist, der Katalysator ohne Abrieb und Abtrennung der katalytisch aktiven Substanz im wesentlichen im Verfahrenskreislauf verbleibt.

Die Lösung dieser Aufgabe erfolgt dadurch, daß eine natürlich vorkommende Zeolith-Mischung, bestehend aus 10 bis 20 Gew.-% Mordenit, 60 bis 70 Gew.-% Clinoptilolit, 0 bis 5 Gew.-% Montmorillonit, Rest SiO₂ und eisenhaltige Verbindungen eingesetzt wird. Für den Mordenit empfiehlt sich solcher mit einem SiO₂:Al₂O₃-Molverhältnis von < 10, vorzugsweise 4,0 bis 9,5.
Im natürlich vorkommenden Zeolith lassen sich Eisen, Kupfer, Mangan-, Vanadium-, Chrom-, Nickel-, Kobalt-, Zink-, Molybdän-, Niob- und Wolfram-Ionen einzeln oder zu mehreren anstelle der im Gitter vorhandenen Wasserstoffionen und/oder der Alkaliund/oder Erdalkali-Metallionen als katalytisch aktive Substanz einbauen. Dadurch ist gewährleistet, daß die katalytisch aktive Substanz nicht abgerieben wird und demzufolge deren katalytische Wirkung erhalten bleibt.
Zweckmäßigerweise wird das Ammoniak in den Reaktionsraum, in dem die Abgase eine Temperatur von 150 bis 500°C aufweisen und/oder in die Abgasleitung unmittelbar nach dem Anschluß an die Verbrennungseinrichtung, in der die Abgase eine Temperatur von 800 bis 950°C besitzen, eingebracht.
Im Abgas enthaltene geringe Mengen an sauren Schadstoffen, wie SO₂, HCl und HF lassen sich dadurch abscheiden, daß die Mischung noch 10 bis 30 Gew.-% CaCO₃, CaO und/oder Ca(OH)₂ einzeln oder zu mehreren enthält.
Der Sauerstoffgehalt im Reaktionsraum ist > 1 Vol.-%, vorzugsweise 3 bis 12 Vol.-%.
Für die Durchführung des Verfahrens hat sich eine mittlere Teilchengröße des Katalysators d₅₀ < 0,1 mm, vorzugsweise 5 bis 50 mm, als vorteilhaft erwiesen. Bei dieser Teilchengröße wird ein Abbau der Stickoxide von wenigstens 80 % erreicht.
Das erfindungsgemäße Verfahren wird vorzugsweise in einem Wirbelschicht-Reaktor mit zirkulierender Wirbelschicht mit einer mittleren Dichte der Abgas-Feststoff-Suspension von 2 bis 10 kg/Nm³ Abgas und einer Abgasgeschwindigkeit 3 bis 8 m/s, insbesondere 4 bis 5 m/s, durchgeführt. Die zirkulierende Wirbelschicht zeichnet sich dadurch aus, daß im Unterschied zur klassischen Wirbelschicht, bei der eine dichte Phase durch einen deutlichen Dichtesprung von dem darüber befindlichen Gasraum getrennt ist, Verteilungszustände ohne definierte Grenze vorliegen. Ein Dichtesprung zwischen dichter Phase und darüber befindlichem Gasraum ist bei einer zirkulierenden Wirbelschicht nicht existent, jedoch nimmt innerhalb des Reaktors die Feststoffkonzentration von unten nach oben ständig ab.

Es ist auch möglich, die katalytische Reaktion in einem Flugstromreaktor durchzuführen, in dem die mittlere Dichte der Abgas-Feststoff-Suspension 20 bis 200 g Feststoff/Nm³ Abgas die Gasgeschwindigkeit 6 bis 20 m/s betragen. Ein Flugstromreaktor kann vorteilhaft bei der Reinigung von kleinen Abgasmengen zum Einsatz gelangen.

Darüber hinaus besteht die Möglichkeit, als Reaktionsraum die Abgasleitung im Bereich von dem Anschluß an die Verbrennungseinrichtung und deren Ende vor der Entstaubungseinrichtung zu benutzen, wobei die Werte für die Gasgeschwindigkeit und die mittlere Dichte der Abgas-Feststoff-Suspension gleich den Werten bei einem Flugstromreaktor sind.

Als Ammoniak abgebende Verbindungen kommen insbesondere (NH₄)SO₄, (NH₄)₂CO₃, (NH₄)HCO₃, (COONH₄)₂H₂O, HCOONH₄, NH₃, NH₄OH, H₂N-CO-NH₂, NH₂CN, Ca(CN)₂, CaCN₂, NaOCN, C₂H₄N₄, C₃H₆N₆ einzeln oder im Gemisch in Betracht. Gegebenenfalls kann den Ammoniak abgebenden Verbindungen ein OH-Radikalbildner, wie Alkohole, Zucker, Stärke, Cellulose einzeln oder zu mehreren zugesetzt werden.

Eine besondere Ausbildung des Verfahrens ist darin zu sehen, dass die aus dem Reaktionsraum ausgetragenen Katalysatorteilchen abgeschieden und danach wieder in den Reaktionsraum zurückgeführt werden.

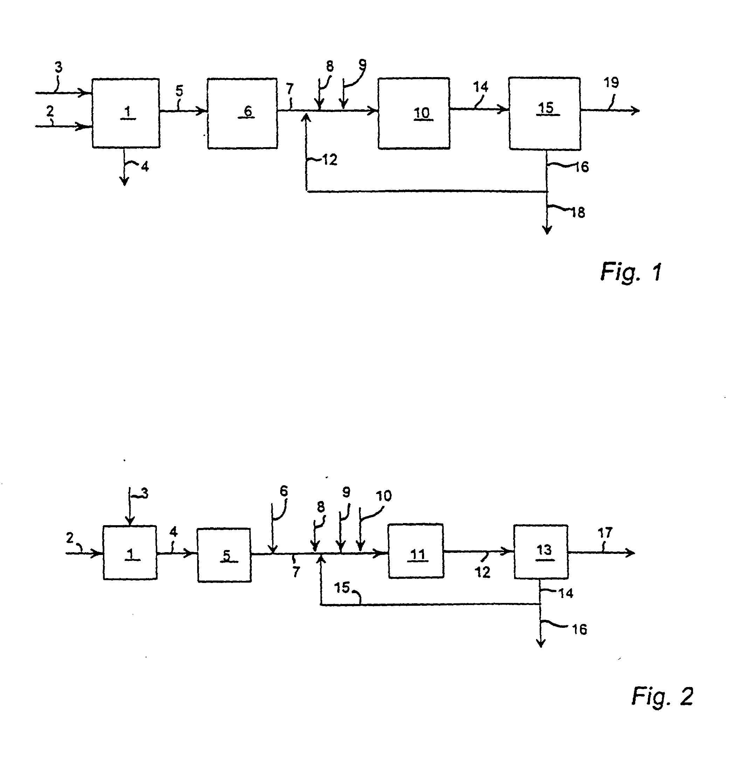

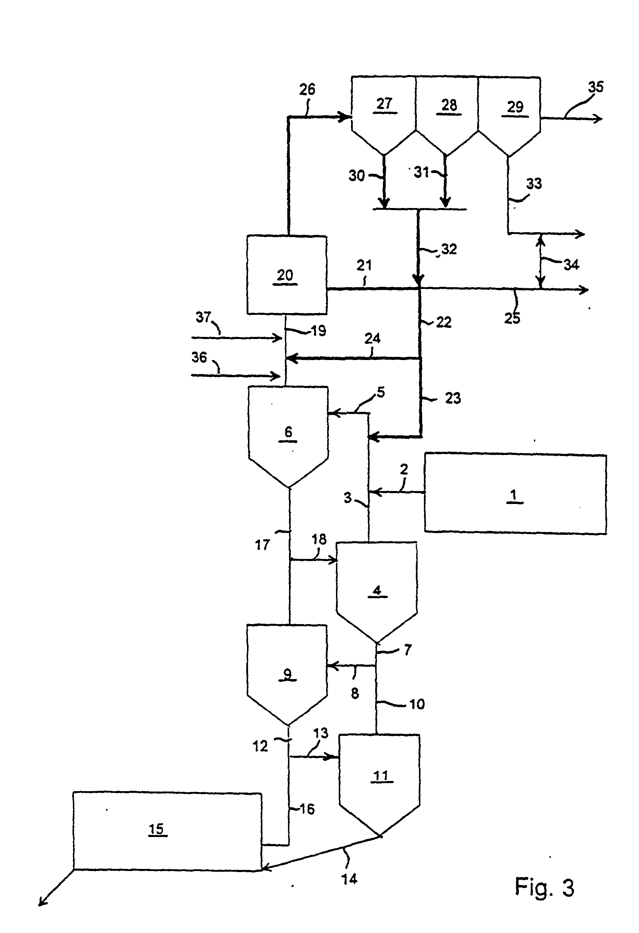

## Patentansprüche

1. Verfahren zur katalytischen Reduktion von in sauerstoffhaltigen Abgasen von Verbrennungseinrichtungen enthaltenen Stickoxiden, bei dem den eine Temperatur von 150 bis 950 °C aufweisenden Abgasen Ammoniak im Molverhältnis NO:NH₃ von 1:0,5 bis 1:1,5 zugesetzt wird und bei dem in einem von den Abgasen mit einer Geschwindigkeit von 1 bis 50 m/s durchströmten Reaktionsraum als Katalysator natürlich vorkommender Zeolith mit 0,1 bis 10 Gew.-% katalytisch aktiver Substanz, bestehend aus einem oder mehreren im Zeolithgitter durch Kationenaustausch eingebauten Metallionen, Kupfer und Eisen, suspendiert ist, **dadurch gekennzeichnet, dass** eine natürlich vorkommende Zeolith-Mischung, bestehend aus 10 bis 20 Gew.-% Mordenit, 60 bis 70 Gew.-% Clinoptilolit, 0 bis 5 Gew.-% Montmorillonit, Rest SiO₂ und eisenhaltige Verbindungen eingesetzt wird.

2. Verfahren nach Anspruch 1, **dadurch gekennzeichnet, dass** die Mischung noch 10 bis 30 Gew.-% CaCO3, CaO und Ca (OH) 2 einzeln oder zu mehreren enthält.

3. Verfahren nach einem der Ansprüche 1 und 2, **dadurch gekennzeichnet, dass** Ammoniak in den Reaktionsraum, in dem die Abgase eine Temperatur von 150 bis 500 °C aufweisen, eingebracht wird.

4. Verfahren nach einem der Ansprüche 1 und 2, **dadurch gekennzeichnet, dass** Ammoniak in die Abgasleitung unmittelbar nach deren Anschluss an die Verbrennungseinrichtung, in der die Abgase eine Temperatur von 800 bis 950 °C aufweisen, eingebracht wird.

5. Verfahren nach einem der Ansprüche 1 bis 4, **dadurch gekennzeichnet, dass** der Sauerstoffgehalt im Reaktionsraum > 1 Vol.-%, vorzugsweise 3 bis 12 Vol.-%, ist.

6. Verfahren nach einem der Ansprüche 1 bis 5, **dadurch gekennzeichnet, dass** die mittlere Teilchengröße des Katalysators d50 < 0,1 mm, vorzugsweise 5 bis 50 µm, beträgt.

7. Verfahren nach einem der Ansprüche 1 bis 6, **gekennzeichnet, durch** die Verwendung eines Wirbelschicht-Reaktors mit zirkulierender Wirbelschicht mit einer mittleren Dichte der Abgas-Feststoff-Suspension von 2 bis 10 kg/Nm³ Abgas und einer Abgasgeschwindigkeit von 3 bis 8 m/s, vorzugsweise 4 bis 5 m/s.

8. Verfahren nach einem der Ansprüche 1 bis 6, **gekennzeichnet durch** die Verwendung eines Flugstromreaktors mit einer mittleren Dichte der Abgas-Feststoff-Suspension von 10 bis 200 g/Nm³ Abgas und einer Abgasgeschwindigkeit von 6 bis 20 m/s beträgt.

9. Verfahren nach einem der Ansprüche 1 bis 6, **dadurch gekennzeichnet, dass** als Reaktionsraum die Abgasleitung im Bereich von deren Anschluss an die Verbrennungseinrichtung und deren Ende vor der Entstaubungseinrichtung verwendet wird.

10. Verfahren nach einem der Ansprüche 1 bis 9, **dadurch gekennzeichnet, dass** als Ammoniak abgebende Verbindungen (NH₄) SO₄, (NH₄)₂CO₃, (NH₄) HCO₃, (COONH₄) ₂H₂O, HCOONH₄, NH₃, NH₄OH, H₂N-CO-NH₂, NH₂CN, Ca (CN)₂, CaCN₂, NaOCN, C₂H₄N₄ und C₃H₆N₆ einzeln oder im Gemisch verwendet werden.

11. Verfahren nach Anspruch 10, **dadurch gekennzeichnet, dass** den Ammoniak abgebenden Verbindungen OH-Radikalbildner, wie Alkohole, Zucker, Stärke und Cellulose einzeln oder zu mehreren zugesetzt werden.

12. Verfahren nach einem der Ansprüche 1 bis 11, **dadurch gekennzeichnet, dass** die aus dem Reaktionsraum ausgetragenen Katalysatorteilchen abgeschieden und in den Reaktionsraum zurückgeführt werden.

## Claims

1. A process for the catalytic reduction of nitrogen oxides contained in oxygen-containing exhaust gases of combustion means, in which ammonia in a molar ratio NO:NH₃ of 1:0.5 to 1:1.5 is added to the exhaust gases having a temperature of 150 to 950°C, and in which naturally occurring zeolite containing 0.1 to 10 wt-% catalytically active substance consisting of one or more metal ions incorporated in the zeolite lattice by cation exchange, copper and iron, is suspended in a reaction space through which the exhaust gases flow at a rate of 1 to 50 m/s, **characterised in that** a naturally occurring zeolite mixture, which consists of 10 to 20 wt-% mordenite, 60 to 70 wt-% clinoptilolite, 0 to 5 wt-% montmorillonite, rest SiO₂ and iron-containing compounds, is used.

2. A process according to claim 1, **characterised in that** the mixture also contains 10 to 30 wt-% CaCO₃, CaO and Ca(OH)₂, individually or plurally.

3. A process according to one of claims 1 and 2, **characterised in that** ammonia is introduced into the reaction space, in which the exhaust gases have a temperature of 150 to 500°C.

4. A process according to any of claims 1 and 2, **characterised in that** ammonia is introduced into the exhaust gas line directly after its connection to the combustion means, in which the exhaust gases have a temperature of 800 to 950°C.

5. A process according to any of claims 1 to 4, **characterised in that** the oxygen content in the reaction space is > 1 vol-%, preferably 3 to 12 vol-%.

6. A process according to any of claims 1 to 5, **characterised in that** the average particle size of the catalyst d₅₀ is < 0.1 mm, preferably 5 to 50 µm.

7. A process according to any of claims 1 to 6, **characterised by** the use of a fluidised-bed reactor with a circulating fluidised bed with an average density of the exhaust gas/solids suspension of 2 to 10 kg/sm³ exhaust gas and an exhaust gas velocity of 3 to 8 m/s, preferably 4 to 5 m/s.

8. A process according to any of claims 1 to 6, **characterised by** the use of an entrained-bed reactor with an average density of the exhaust gas/solids suspension of 10 to 200 g/sm³ exhaust gas and an exhaust gas velocity of 6 to 20 m/s.

9. A process according to any of claims 1 to 6, **characterised in that** the exhaust gas line in the area from its connection to the combustion means to its end before the dedusting means is used as reaction space.

10. A process according to any of claims 1 to 9, **characterised in that** (NH₄)SO₄, (NH₄)₂CO₃, (NH₄)HCO₃, (COONH₄)₂H₂O, HCOONH₄, NH₃, NH₄OH, H₂N-CO-NH₂, NH₂CN, Ca(CN)₂, NaOCN, C₂H₄N₄ and C₃H₆N₆, individually or in a mixture, are used as ammonia-releasing compounds.

11. A process according to claim 10, **characterised in that** OH radical formers such as alcohols, sugar, starch and cellulose, individually or plurally, are added to the ammonia-releasing compounds.

12. A process according to any of claims 1 to 11, **characterised in that** the catalyst particles discharged from the reaction space are separated and recirculated into the reaction space.

## Revendications

1. Procédé de réduction catalytique d'oxydes d'azote contenus dans des gaz de fumée oxygénés d'installations de combustion, dans lequel on ajoute aux gaz de fumée ayant une température de 150 à 950°C de l'ammoniac dans le rapport molaire de NO:NH₃ de 1:0,5 à 1:1,5 et dans lequel on met en suspension dans une chambre de réaction, dans laquelle les gaz de fumée passent à une vitesse de 1 à 50 m/s, en tant que catalyseur, un zéolithe d'origine naturelle avec de 0,1 à 10 % en poids d'une substance active catalytiquement, constituée d'un ou de plusieurs ions métalliques, cuivre et fer, insérés dans le réseau de zéolithe par échange de cations, **caractérisé en ce que** l'on utilise un mélange de zéolithe d'origine naturelle constitué de 10 à 20% en poids de mordénite, de 60 à 70 % en poids de clinoptilolite, de 0 à 5 % en poids de montmorillonite, le reste étant du SiO₂ et des composés ferreux.

2. Procédé suivant la revendication 1, **caractérisé en ce que** le mélange contient en outre individuellement ou à plusieurs de 10 à 30 % en poids de CaCO3, de CaO et de Ca (OH)2.

3. Procédé suivant l'une des revendications 1 et 2, **caractérisé en ce que** l'on introduit de l'ammoniac dans la chambre de réaction dans laquelle les gaz de fumée ont une température de 150 à 500°C.

4. Procédé suivant l'une des revendications 1 et 2, **caractérisé en ce que** l'on introduit de l'ammoniac dans le conduit pour les gaz de fumée juste après son raccord à l'installation de combustion, dans laquelle les gaz de fumée ont une température de 800 à 950°C.

5. Procédé suivant l'une des revendications 1 à 4, **caractérisé en ce que** la teneur en oxygène dans la chambre de réaction est supérieure à 1 % en volume et de préférence de 3 à 12 % en volume.

6. Procédé suivant l'une des revendications 1 à 5, **caractérisé en ce que** la dimension moyenne des particules du catalyseur d50 est inférieure à 0,1 mm et de préférence est comprise entre 5 et 50 µm.

7. Procédé suivant l'une des revendications 1 à 6, **caractérisé par** l'utilisation d'un réacteur à lit fluidisé à couche fluidisée circulante ayant une masse volumique moyenne de la suspension gaz de fumée-matières solides de 2 à 10 kg/m³ de gaz de fumée pris dans les conditions normales de température et de pression et une vitesse des gaz de fumée de 3 à 8 m/s, de préférence de 4 à 5 m/s.

8. Procédé suivant l'une des revendications 1 à 6, **caractérisé par** l'utilisation d'un réacteur hélicoïdal avec une masse volumique moyenne de la suspension gaz de fumée-matières solides de 10 à 200 g/m³ de gaz de fumés pris dans les conditions normales de température et de pression et une vitesse des gaz de fumée de 6 à 20 m/s.

9. Procédé suivant l'une des revendications 1 à 6, **caractérisé en ce que** l'on utilise comme chambre de réaction le conduit pour les gaz de fumée dans la partie de son raccordement à l'installation de combustion et de son extrémité avant l'installation de dépoussiérage.

10. Procédé suivant l'une des revendications 1 à 9, **caractérisé en ce que** l'on utilise comme composés donnant de l'ammoniac (NH₄)SO₄, (NH₄)₂CO₃, (NH₄)HCO₃, (COONH₄)2H₂O, HCOONH₄NH₃, NH₄OH, H₂N-CO-NH₂, NH₂CN, Ca(CN)₂, CaCN₂, NaOCN, C₂H₄N₄ et C₃H₆N₆ indépendamment ou en mélange.

11. Procédé suivant la revendication 10, **caractérisé en ce que** l'on ajoute aux composés donnant de l'ammoniac des agents formant des radicaux OH comme des alcools, des sucres de l'amidon ou de la cellulose individuellement ou à plusieurs.

12. Procédé suivant l'une des revendications 1 à 11, **caractérisé en ce que** l'on sépare les particules de catalyseur déchargées de la chambre de réaction et on les retourne à la chambre de réaction.
